# EUROPÄISCHE PATENTANMELDUNG

(11) **EP 0 697 296 A1**
(43) Veröffentlichungstag der Anmeldung: **21.02.1996**
(21) Anmeldenummer: 95112384.3
(22) Anmeldetag: 07.08.1995
(51) Int. Cl.: B60B 33/06, B62B 3/06

(54) **Hebe-und Transportvorrichtung für schwere Gegenstände**

(30) Priorität: 18.08.1994 CH 2543/94
(71) Anmelder: JOLLYBO S.A., CH-6929 Gravesano (CH)
(72) Erfinder: Braunwalder, Marco, CH-6929 Gravesano (CH)
(74) Vertreter: Gaggini, Carlo, Dipl.-Ing. ETH

(57) **Zusammenfassung**

Die Erfindung betrifft eine Vorrichtung für das Heben und Transportieren von schweren Gegenständen, besonders Möbel und Aehnliches, mittels am Bodenteil (2) des Gegenstandes befestigte Gleiträder (6),die von einer Ruheposition , in welcher sie vom Fussboden weggehoben sind, so dass der Gegenstand auf seinem Sockel (1) ruht , in eine Arbeitsposition gebracht werden können, in welcher die Räder (6) das Gewicht des Gegenstandes tragen, welcher auf diesen Räder gleiten kann, gebracht werden können.

Nach der Erfindung sind alle Räder (6) durch Gewindestangen (8) an den Rahmen (4) befestigt und sind drehfest durch eine Kette (12) oder einen Zahnriemen, der sie synchronisch dreht , verbunden.

Der Vorteil dieser Erfindung liegt in seiner grossen Einfachheit, was die Kosten erniedrigt, in der Bequemlichkeit der Vorrichtungsanwendung und in der Tatsache, dass sie unsichtbar im Sockel des zu verschiebenden Möbels eingebaut werden kann.

## Beschreibung

Die vorliegende Erfindung betrifft eine Hebe-und Transportvorrichtung für schwere Gegenstände nach dem Oberbegriff des Anspruch 1.

Solche Vorrichtungen sind speziell für das Heben und Transportieren von schweren Gegenständen, wie es alle Typen von Maschinen und Aggregate sein können, nützlich, besonders aber für Möbel, wie umfangreiche Kästen, Schreib-fische oder ähnliche. Speziell ist mit der heutigen Tendenz im Bereich der Büroeinrrichtung, die die höchste Einsatzflexibilität der vorhandenen Räumlichkeit verlangt, eine erhöhte Beweglichkeit der Einrichtungsgegenstände unbedingt notwendig. Die Erfindung will der Lösung dieses Problemes einen wesentlichen Beitrag geben.

Es sind bereits Vorrichtungen zum Heben und Transportieren von schweren Gegenständen, im Besonderen von Möbeln, bekannt.

Die DE-C-10 58 435 zeigt zum Beispiel eine Transportvorrichtung für schwere Gegenstände, im welcher ein Transportrahmen, der unter dem zu trans-portierenden Gegenstand fest oder vorübergehend angebracht ist, Gleiträder besitzt, die an kippbar gestützte Hebel befestigt sind, wobei dann die freien Enden einer oder mehreren Hebelpaare mit einer oder mehreren Druckrollen gelenkig verbunden sind, worauf ein Nocken wirkt, der durch seine Drehung die kollektive Senkung bzw. Erhöhung aller Rollen bewirkt. Die Nocke kann von der oberen Seite der Möbelbodenteil durch eine Kurbel betätigt werden.

Eine andere bekannte Lösung ist weiter diejenige der DE-A-31 47 631, in welcher Gleiträder tragende Schienen vorgesehen sind. Im Raum oberhalb der Tragschiene sind wenigstens zwei Stützvorrichtungen angebracht, in welchen zwei vertikale Gewindestangen getragen werden , die die vertikale Verschiebung der Rollen bewirken. Die beiden verikalen Gewindestangen sind je mit einem Kegelradgetriebe, das auf eine gemeinsame, horizontale Getriebewelle verkeilt ist, ausgerüstet. Wenn von Aussen die Getriebewelle gedreht wird, drehen sich gleichzeitig die beiden, je eines der Schienen tragenden, Gewindestangen . Damit werden die Räder in ihre vertikale Stellung verschoben und der schwere Gegenstand, z.B. ein Möbelstück, wird zur Verschiebung in die gewünschte Position gehoben, bzw. gesenkt.

Die beiden gezeigten Lösungen betreffen zwar das allgemeine Problem dieser Erfindung. Sie haben jedoch den Nachteil, sehr kompliziert und demnach kost-spielig zu sein und benötigen einen gewissen Unterhalt. Dies wegen dem Einsatz von Nocken im ersten Fall und Kegelradgetriebe im zweiten Fall. Ferner haben diese beiden Lösungen den Nachteil , einen grossen vertikalen Raumbedarf zu beanspruchen, sodass der zu transportierende Gegenstand mit einem hohen Sockel versehen werden muss, mit allen Nachteilen - unnötiger Platzverschleiss, Bedienungsschwierigkeiten, usw.- die damit hervorgerufen werden.

Die vorliegende Erfindung will demnach eine Lösung für das von diesen Dokumenten des Standes der Technik aufgeworfenen Problemes vorschlagen, wo jedoch die darin enthaltenen Nachteile behoben werden.

Im Besonderen will man eine Hebe- und Transportvorrichtung für schwere Gegenstände nach dem Stand der Technik vorschlagen, die jedoch einfach und billig ist , leicht im Möbelsockel angebracht werden kann und einen geringen vertikalen Raumbedarf verlangt, sodass sie in den Möbelsockel untergebracht werden kann, ohne dass besondere Massnahmen in Bezug auf die Höhe derselben getroffen werden müssen.

Die Zwecke werden mit der Erfindung , die den Charakteristiken des Anspruches 1 entspricht, erreicht.

Dank der Tatsache, dass jedes Rad durch eine eigene Gewindestange am Rahmen befestigt ist und dass alle Gewindestangen drehfest durch ein einziges Kraftübertragungsorg verbunden sind, können alle kostspieligen und umfangreichen Uebertragungsmittel , wie Hebel und Getriebe, die dem Stand der Technik bekannt sind, beseitigt werden, sodass eine überaus einfache und kompakte Lösung verwirklicht wird.

Die zusätzlichen Ansprüche betreffen andere bevorzügliche Ausführungen des Erfindungskonzeptes und werden im Verlauf der folgenden Beschreibung genauer beschrieben werden.

Die Erfindung wird nun im Detail mit Hilfe einer Ausführungsform und deren Figuren detaillierter beschrieben.

Die Figuren zeigen:
Die Fig. 1 Ein Konstruktionsdetail einer der Vorrichtungsgleiträder nach der Erfindung, an den Bodenteil des zu hebenden und verschiebenden Möbels angebracht.
Die Fig. 2 Die schematische Gesamtansicht der Vorrichtung nach der Erfindung, mit Ansicht des Möbels der Fig. 1 von unten.
Die Fig. 3 ein anderes Konstruktionsdetail der erfinderischen Vorrichtung der Fig. 1, das eine Lösung für die Betätigigung der Vorrichtung selbst zeigt.

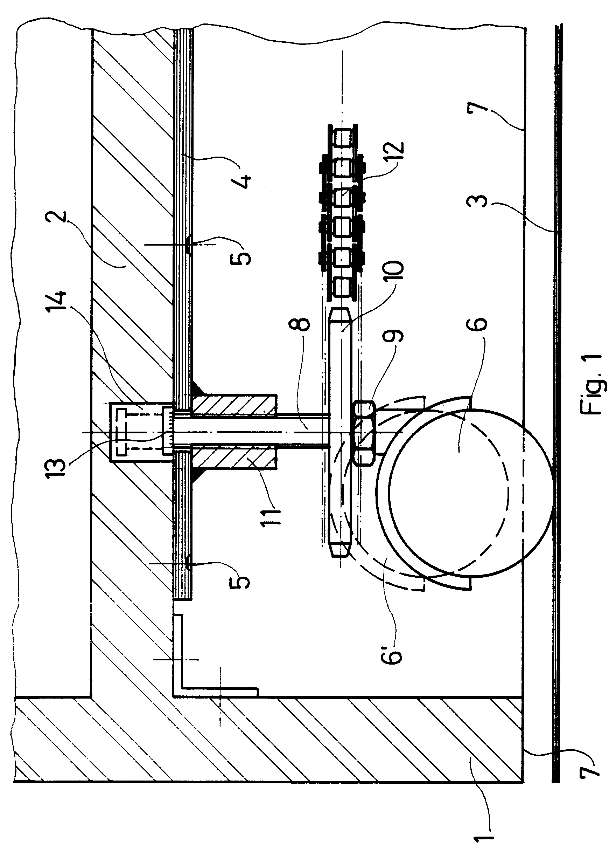

Die Fig. 1 zeigt den Bodenteil eines zu hebenden und transportierenden schweren Gegenstandes, hier im spezifischen Fall ist ein Kastenfuss dargestellt, wovon der Sockel 1 erkennbar ist, in dessen Innern auf einer gewissen Höhe der Bodenteil befestigt ist. In dieser Realisierungsform der Erfindung befindet sich die Hebe- und Transportvorrichtung, die weiter unten detaillierter beschrieben wird, im Zwischenraum zwischen dem Bodenteil 2 des Möbels und dem Fussboden 3 , welcher Zwischenraum auf allen Seiten komplett oder teilweise vom Sockel 1 umschlossen ist. Diese Lösung wird dank der Tatsache bevorzugt, dass die eigentliche Vorrichtung von Aussen verborgen bleibt: es sei jedoch bereits jetzt unterstrichen, dass die erfinderische Vorrichtung an irgendeinen Gegenstand angebracht werden kann , welcher durch geeignete Stützfüsse auf dem Fussboden stützt, sei es, dass es sich um Holz- oder Metallmöbel handelt, sei es, dass es sich um Maschinen oder andersartige Aggregate , wie zum Beispiel Klimatisierungsaggregate für Büros, handelt, welchen man die Verschiebung im Raum erleichtern will.

Dem Bodenteil 2 des zu transportierenden schweren Gegenstandes, den wir einfachheitshalber immer Möbel nennen werden, ist ein von unten durch Schrauben 5 am Bodenteil 2 befestigter Rahmen 4 befestigt (nur schematisch angegeben). Der Rahmen 4 kann aus einzelnen unter sich geschweissten Profilen hergestellt sein oder, wie in Fig. 1 gezeigt und nach einer bevorzüglichen Realisierungsform mit dem Vorteil der äussersten Einfachheit, aus einer einzigen Metallplatte bestehen, an welche, zum Beispiel durch Schweissung, die anderen Elemente der erfinderischen Vorrichtung, die weiter unten detailliert erklärt werden, befestigt sind.

In mindestens drei am Rahmen 4 verteilten Stellen sind nun, nach einer bevorzugten Form der Erfindung und damit eine stabile Stütz- und Gleitbasis des zu transportierenden Gegenstandes gebildet wird, schwenkbare Gleiträder 6 in der Art, die im Verlauf der Beschreibung genau angegeben wird, angebracht.

Mit schwenkbaren Räder versteht man hier Räder in Scheiben- oder Kugelform, die um einen horizontalen Bolzen drehen können , der seinerseits an eine vertikale Achse befestigt ist, um welches das Rad frei seitliche Kippbewegungen ausführen kann. Solche Räder, im allgemeinen Gebrauch, zum Beispiel, bei Bürostühlen erlauben die freie Bewegung des Gegenstandes in alle Richtungen, da sie sich automatisch in alle Richtungen anpassen. Der Gebrauch von solchen Rädern ist auch ausreichend im obenerwähnten Stand der Technik dokumentiert, siehe beispielsweise die DE-A-10 58 435.

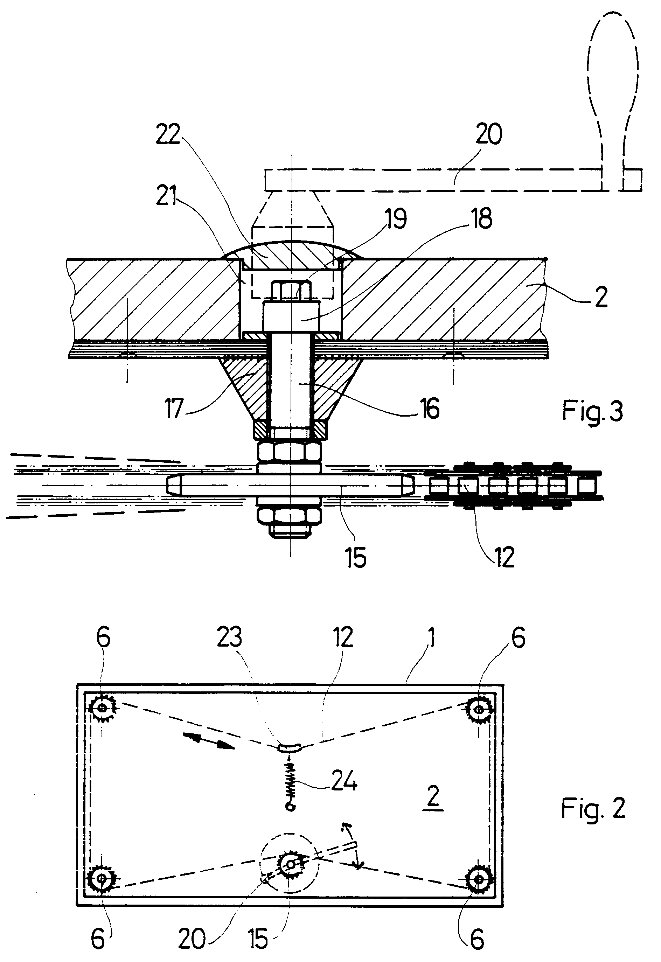

In der Fig. 2 sieht man, dass am Bodenteil 2 des Möbels schwenkbare Räder in den vier Ecken des Möbels angebracht sind, was oft die offensichtlichste Lösung sein sollte. Dies bedeutet jedoch nicht, dass in anderen Fällen, und bei Vorhandensein von Gegenständen von komplizierterem Bauwesen, es nicht notwendig sein könnte, eine grössere Anzahl Räder anzubringen, unter Berücksichtigung dass, erfinderisch gesehen, die bevorzügliche Lösung jene ist, die, unter Anwendung von der geringstmöglichsten Anzahl Räder, das heisst mindestens drei, die Verwirklichung einer stabilen Stütz- und Gleitbasis des zu transportierenden Gegenstandes erlaubt. Die Gleiträder 6 sind nun in der Höhe einstellbar, wie dies vom Stand der Technik, der die Basis der vorliegenden Erfindung bildet, bekannt ist, und zwar zwischen einer Ruheposition, in der Fig. 1 durch gestrichelte Linien als Stellung 6' bezeichnet, in welcher sie sich oberhalb der Stützebene 7 des Sockels 1 befinden, und einer Arbeitsposition, in Fig. 1 durch durchgehende Linien gezeigt, in welcher die Räder 6 mit ihrer Umfangslinie, nach vorheriger Erhebung des Gegenstandes vom Fussboden 3, aus der obenerwähnten Stützebene 7 heraustreten, wobei dann diese Verschiebung von der Ruhe- und jene der Arbeitsposition nach der DE-A-31 47 631, durch vertikale, in Gewindebüchsen geschraubte Gewindestangen erzielt wird.

Die vorliegende Erfindung ist nun durch die Tatsache gekennzeichnet, dass jedes Gleitrad 6 am Rahmen 4 durch eine eigene, vertikale Gewindestange 8 befestigt ist. Dies bedeutet, dass das Räderlager 6 (in der Zeichnung nicht gezeigt), um welches das Rad, bzw. das Lager, dreht, mit der vertikalen Stange 8 , in an sich bekannten. Art, durch einen Verbindungskörper, schematisch mit Nummer 9 dargestellt, verbunden ist, was dem Rad 6 und dem Verbindungskörper selbst eine freie Drehung um die Gewindestange 8 erlaubt. Zwischen dem Verbindungskörper 9 und der Gewindestange 8 befindet sich also ein Drehlager von irgendeinem bekannten Typ.

Ueber dem Verbindungskörper 9, trägt dann die Gewindestange 8, in der besonderen Lösung in Fig. 1, die einer ersten bevorzugten Ausführungsform entspricht, ein Kettenrad 10, welches eines der Elemente des Kraftübertragungsorgans bildet, durch welches alle Stangen 8 gleichzeitig in die Büchsen mit Innengewinde 11, durch welche sie mit dem Rahmen 4 verbunden sind, an- und weggeschraubt werden können Das Kraftübertragungsorgan beeinhaltet in seiner ersten Ausführungsform, wie in den Fig. von 1 - 3 dargestellt, eine mit den einzelnen Kettenräder 10 im Eingriff stehenden , geschlossene Kette 12 , wobei jedes Kettenrad 10 in gleicher horizontalen Ebene von jeder Gewindestange 8, die ein Gleitungsrad 6 trägt, befestigt sind.

Wenn die Kette 12 in irgendeiner Weise betätigt wird, wie dies beschrieben wird, werden alle Kettenzahnräder 10 in die gleiche Richtung gedreht, daher werden alle Gewindestangen 8 in ihre Gewindebüchsen 11 an- oder weggeschraubt. Im ersten Fall verschieben sich die Gleiträder 6 in Sinne einer Annäherung zum Bodenteil 2 des Möbels, währenddem sie sich im zweiten Fall entfernen werden. Wenn also alle Gewindestangen 8 von ihren gegenseitigen Büchsen 11 weggeschraubt werden, werden die Räder herausgezogen und gehen von ihrer Ruheposition 6', in Fig. 1 mit gestrichelten Linien gezeichnet, in ihre Position 6, mit durchgehenden Linien bezeichnet, über.Natürlich werden sie, sobald die Umfangslinie der Räder 6 in ihrer unteren Stelle die Stützebene 7 überschreitet, zuerst auf dem Fussboden 3 aufsetzen. Ein weiteres Losschrauben der Gewindestangen 8 wird das Heben des Möbels vom Fussboden 3, welches somit nur von den Gleiträder 6 gestützt wird und somit leicht in alle Richtungen verschoben werden kann, bewirken.

Die Fig. 1 zeigt ebenfalls das Herstellungsdetail , nach welchem die Gewindebüchsen 11 an die den geschweissten Rahmen bildende Platte befestigt sind. Man sieht ausserdem, dass die Gewindestange 8 an ihrem oberen Ende einen Bundring 3 als Sperranschlag für die ausgezogneste Position der Stangen selbst aufweist. Im Bodenteil 2 ist dann in Uebereinstimmung mit jeder Gewindestange 8 ein nicht durchgehendes Loch 14 ausgeführt, das Raum lässt für das obere Ende der Gewindestange 8, wenn diese in die Büchse 11 eingeschraubt wird, also wenn das Gleitrad 6 in seine Ruhestellung gebracht wird.

Nach einer bevorzugten Ausführungsform der Erfindung, in den Figuren nicht dargestellt , da sie den Figg. von 1 bis 3 sehr ähnlich in der Darstellung ist, besteht das Kraftübertragungsorgan, das alle Gewindestangen 8 verbindet, aus einem geschlossenen Zahnriemen , der mit einzelnen Zahnräder, die die gleiche Funktion der Kettenräder 10 haben, in Eingriff steht. Der Gebrauch von einem Zahnriemen an Stelle der Kette hat den Vorteil , ein geringeren Unterhalt zu benötigen.

Damit das Uebertragungsmittel auf den Zahnrädern zirkuliert und demnach die hebende oder senkende Verschiebung der Gleiträder 6 verursacht, kann nun auf verschiedene Arten vorgegangen werden, wovon zwei durch die gebotenen Vorteile vorgezogen und hier nun im Detail beschrieben werden.

Nach einer ersten Art wird die Räderverschiebung 6 durch die Drehung irgendeiner der Gewindestangen 8 erzielt, die somit die Funktion der Betätigungsstange in ihrer Büchse 11 übernimmt. Diese Lösung ist in den Figuren nicht im Detail dargestellt worden, da sie, was die gemeinsamen Züge anbelangt, in der zweiten, nachfolgenden Lösung beschrieben wird. Der Vorteil dieser Lösung ist die Einfachheit, da sie keinen Einsatz einer separaten Betätigungsstange verlangt. In der Tat eignet sich für diese Funktion jede ein Rad 6 tragende Gewindestange 8, vorausgesetzt, dass sie vom oberen Teil des Möbelbodenteils 2 zugänglich ist, das heisst, dass das übereinstimmende Loch 14 nicht ein blindes Loch, sondern ein durchgehendes Loch ist. Diese Lösung hat demnoch oftmals einen deutlichen Nachteil wegen der Tatsache, dass alle mit Gleiträdern 6 versehenen Gewindestangen 8 in der Nähe der Möbelecken, wie man in Fig. 2 sieht, angebracht sind. In diesem Fall wird es dann aus Platzmangel schwierig, am oberen Ende der Betätigungsgewindestange eine Kurbel zu seiner leichten Drehung anzubringen, da die Kurbel, ohne das Herausziehen und Wiedereinstecken auf den Zapfen , nicht mehr als um 90 Grad gedreht werden könnte.

Diesem muss demnach mittels Benützung eines Schlüssels oder Schnappkurbel Abhilfe geschaffen werden, aber auch so ist Bedienung nicht die Leichteste.

Um diesem Nachteil vorzubeugen, kann man, auf eine bevorzugte und in den Fig. 2 und 3 dargestellte Erfindungsform zurückgreifend, ein separates Betätigungsorgan vorsehen. Das Betätigungsorgan besteht aus einem sich mit der geschlossenen Kette 12 im Eingriff stehendes Rad 15 (welches natürlich auch, nach einer anderen bevorzugten Ausführungsform der Erfindung, der Zahnriemen sein kann), dessen Zapfen 16 in einer fixen Büchse 17, die fest mit dem Vorrichtungsrahmen 5 ist, gelagert wird.

Das obere Ende 18 des Zapfens 16 tritt aus dem oberen Ende des Bodenteils 2 heraus und weist eine Kupplung 19 für eine Betätigungskurbel 20 auf. Das obere Zapfenende 16 soll vorzüglicherweise in den Bodenteilbelag 2 eingebettet sein,, der nämlich ein mit dem Zapfen 16 konzentrisches Loch aufweist. Wenn die Hebevorrichtung nicht gebraucht wird, entfernt man die Kurbel 20 von der Kupplung 19 und das Loch 21 wird durch ein Deckelchen 22 geschlossen.

Der Vorteil dieser Ausführungsform erscheint von der Fig. 2 klar, welche die Vorrichtung im Grundriss von unten gesehen zeigt. Die Tatsache, dass das Betätigungsorgan, das aus den Elementen von 15 bis 20 besteht, in irgendeinem Punkt des Möbelbodenteils 2 angebracht werden kann, da es an keine tragende Funktion gebunden ist, weil der Zapfen ohne Gleitrad ist, erlaubt seine Anordnung in genügender Distanz vom Rand oder Sockel des Möbels, sodass der Kurbel 20 eine komplette Umdrehung ausführen kann . Dies vereinfacht die Betätigung der Hebevorrichtung. Man bemerke, dass es sinnvoll ist, da das Rad 15 nicht auf einer Gewindestange, die eine axiale Verschiebungen ausübt, montiert ist, sondern in einer fixen, horizontalen Ebene angeordnet ist, währenddem die Kettenräder, den Verschiebungen der Gleiträder nachfolgend ,eine vertikale Verschiebung auf- und abwärts ausüben, für die Horizontalebene des Rades 16 die Mittelebene zwischen den beiden äusseren, horizontalen Ebenen zu wählen, die die Kettenräder 10 in ihrem höchsten, bzw. niedrigsten Punkt enthalten. Dies reduziert auf ein Minimum die Gefahr, dass die Kette von einem Kettenrad fällt, eine Gefahr, die deshalb besteht, weil die Kettenräder nicht alle in der gleichen Ebene liegen.

Der Vorteil der obenbeschriebenen und bevorzugten Betätigung der Hebevorrichtung am oberen Bodenteil 2 liegt in der Bequemlichkeit und in der Tatsache, dass es so möglich ist, die Vorrichtung hinter einem geschlossenen , dem ganzen Umfang entlang gehenden Sockel komplett zu verbergen. Wir möchten jedoch hervorheben dass, wenn ein Zutritt von einer der Seiten vorgesehen wird (z. B. wenn der Sockel 1 aus einzelnen Füssen besteht zwischen welchen ein leerer Raum bleibt) auch eine Betätigung der Hebevorrichtung von einer der Seiten verwirklicht werden kann (z.B. indem eine der Gewindestangen 8 direkt mit einem Schnappschlüssel gedreht wird) , ohne dass deswegen der Bodenteil 2 durchbohrt werden muss, um das Ende des Zapfens oder der Betätigungsstange heraustreten zu lassen.

Eine weitere Verbesserung der erfinderischen Vorrichtung besteht ferner darin, wie in Fig. 2 gezeigt, dass das Uebertragungsorgan, z.B. die geschlossene Kette 12, durch einen fixen, einstellbaren Spanner in die Stellung
gespannt wird (nicht gezeigt) oder durch einen unter Federkraft 24 stehenden, mobilen Spanner 23, der so gegen das Uebertragungsorgan, z.B. die Kette 12, drückt.

Die Hebe- und Transportvorrichtung für schwere Gegenstände ist einfach in der Herstellung, lässt sich im Sockel der Gegenstände komplett verhüllen, besonders der Möbel, und ist einfach zu betätigen. Sie kann bereits im Moment der Möbelfabrikation in diese eingebaut oder später montiert werden.

Sein Gebrauch ist besonders für die Versetzung von Kästen, Büromöbeln , schweren Verkaufsgestelle vorteilhaft, auch, da diese nicht geleert werden müssen. Nach dem Transport und vorherigem Heben vom Fussboden wird der schwere Gegenstand nach komplettem Einziehen der Räder auf den Fussboden abgestellt, so dass der Gegenstand dann stabil auf seinem Sockel ruht und es besteht keine zufällige Verschiebungsgefahr desselben.

Dies erleichtet alle Reorganisationsarbeiten der Büros sowie die Ausführung alle Unterhaltsarbeiten (Bödenbehandlung, Mahlen der Wände hinter den Möbeln, Montage elektrischer Kabel, usw.), die in den Büros und in den privaten Wohnungen nötig sein können. Ein sehr vielversprechendes Anwendungsgebiet dieser Erfindung ist jenes der Verkaufsgestelle in den Supermärkten, die für die Umstrukturierung der Verkaufsoberfläche oft verschoben werden. Auch hier ist es nützlich, die Gegenstände leicht verschieben zu können, obschon dabei die grösste Stabilität in der Ruhestellung gewährt wird.

### LISTE

- 1.: Sockel
- 2.: Bodenteil
- 3.: Fussboden
- 4.: Rahmen
- 5.: Schraube
- 6.: Gleitrad
- 7.: Stützebene
- 8.: Gewindestange
- 9.: Verbindungskörper
- 10.: Kettenrad
- 11.: Büchse
- 12.: geschlossene Kette
- 13.: Bundring
- 14.: blindes Loch
- 15.: Rad
- 16.: Zapfen
- 17.: fixe Büchse
- 18.: oberes Ende des Zapfens 16
- 19.: Kupplung
- 20.: Kurbel
- 21.: Loch
- 22.: Deckelchen
- 23.: Spanner
- 24.: Feder

## Patentansprüche

1. Hebe- und Transportvorrichtung für schwere Gegenstände, besonders für Möbel, mit schwenkbaren Gleitungsräder, an einem im Innern desSockels des zu transportierenden Gegenstandes angeordnet, wo dann die Gleiträder in die Höhe zwischen einer Ruheposition, in welcher sie sich oberhalb der Stützebene des Gegenstandsockels befinden, und einer Arbeitsposition, in welcher die Räder mit ihrer Umfangslinie nach vorheriger Hebung des Gegenstandes vom Fussboden aus der vorerwähnten Stützebene heraustreten, einstellbar sind und wo die Verschiebung der Räder von ihrer Ruheposition in ihre Arbeitsposition durch wesentlich vertikale, in Büchsen eingeschraubte Gewindestangen erzeugt wird,
dadurch gekennzeichnet, dass
jedes Rad (6) durch eine geeignete, vertikale Gewindestange (8) am Rahmen befestigt ist und dass die Gewindestangen (8) von allenRädern (6) durch ein Kraftübertragungsorgan (10) drehfest verbunden sind, durch welches alle Stangen (8) gleichzeitig in die entsprechende Büchse an- und weggeschraubt werden können (11).

2. Hebe- und Transportvorrichtung nach Anspruch 1,
dadurch gekennzeichnet, dass
das Kraftübertragungsorgan aus einer mit einzelnen Kettenräder (10) im Eingriff stehenden, geschlossenen Kette (12) besteht, wobei jedes Kettenrad (10) in der gleichen horizontalen Ebene von jeder ein Rad (6) tragende Gewindestange (8) befestigt ist.

3. Hebe- und Transportvorrichtung nach Anspruch 1,
dadurch gekennzeichnet, dass
das Kraftübertragungsorgan aus einem mit einzelnen Zahnräder im Eingriff stehenden, geschlossenem Zahnriemen besteht , wobei jedes Kettenrad (10)in der gleichen horizontalen Ebene von jeder ein Rad (6) tragende Gewindestange (8) befestigt sind.

4. Hebe- und Transportvorrichtung nach Anspruch 1,
dadurch gekennzeichnet, dass
die Verschiebung der Räder (6) von ihrer Ruheposition in ihre Arbeitsposition und umgekehrt dadurch realisiert wird, dass eine der Gewindestangen (8) gedreht wird, die somit in ihrer Büchse (11) die Funktion der Betätigungsstange übernimmt.

5. Hebe- und Transportvorrichtung nach Anspruch 1,
dadurch gekennzeichnet, dass
ferner ein Betätigungsorgan des Kraftübertragungsorgans vorgesehen ist, bestehend aus einem Rad (15), das mit dem Betätigungsorgan im Eingriff steht und dessen Zapfen mit seinem oberen Ende (18) aus der oberen Seite des Bodenteils (2) herausragt und an diesem Ende eine Kupplung (19) für eine Betätigungskurbel (20) aufweist.

6. Hebe- und Transportvorrichtung nach den Ansprüchen 4 und 5,
dadurch gekennzeichnet, dass
das obere Ende (18) der Betätigungsstange (8;16) von der oberen Seite des Bodenteils (2) des zu transportierenden Gegenstandes durch ein in den Bodenteil (2) angebrachtes Loch (21) zugänglich ist und eine Kupplung (19) aufweist, durch welche sie mittels eines dafür vorgesehenen Schlüssels oder Kurbel (20) gedreht werden kann.

7. Hebe- und Transportvorrichtung nach Anspruch 1,
dadurch gekennzeichnet, dass
sie mindestens drei Gleiträder (6) aufweist, die in solcher Weise verteilt sind, dass sie eine stabile Stütz- und Gleitbasis für den zu transportierenden Gegenstand bilden.

8. Hebe- und Transportvorrichtung nach den Ansprüchen 2 und 3,
dadurch gekennzeichnet, dass
das Uebertragungsorgan (12) durch einen fixen, in die Position einstellbaren Spanner oder durch einen einer Federkraft (24) unterstehenden beweglichen Spanner, der so gegen das Uebertragungsorgan drückt, gespannt wird.

9. Hebe- und Transportvorrichtung nach Anspruch 1,
dadurch gekennzeichnet, dass
der Rahmen aus einer einzigen Metallplatte besteht, an welche die Gewindebüchsen für die einzelnen Gewindestangen befestigt sind.
